(19) **Europäisches Patentamt European Patent Office Office européen des brevets**

(11) **EP 4 460 112 A1**

(12) **EUROPEAN PATENT APPLICATION**
published in accordance with Art. 153(4) EPC

(43) Date of publication:
   **06.11.2024 Bulletin 2024/45**

(21) Application number: **21969819.8**

(22) Date of filing: **31.12.2021**

(51) International Patent Classification (IPC):
   *H04W 52/14* (2009.01)

(52) Cooperative Patent Classification (CPC):
   **H04W 52/14**

(86) International application number:
   **PCT/CN2021/143967**

(87) International publication number:
   **WO 2023/123474 (06.07.2023 Gazette 2023/27)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(71) Applicants:
   • **Beijing Xiaomi Mobile Software Co., Ltd.**
     **Beijing 100085 (CN)**
   • **Beijing University of Posts and
     Telecommunications**
     **Beijing 100876 (CN)**

(72) Inventors:
   • **ZHU, Yajun**
     **Beijing 100085 (CN)**
   • **HONG, Wei**
     **Beijing 100085 (CN)**
   • **ZHAO, Jinming**
     **Beijing 100085 (CN)**
   • **LI, Yong**
     **Beijing 100085 (CN)**

(74) Representative: **Gunzelmann, Rainer
   Wuesthoff & Wuesthoff
   Patentanwälte und Rechtsanwalt PartG mbB
   Schweigerstraße 2
   81541 München (DE)**

(54) **METHOD AND APPARATUS THEREOF FOR NON-RANDOM-ACCESS CHANNEL SWITCHING IN NON-TERRESTRIAL NETWORK**

(57)    Embodiments of the present disclosure disclose a method and apparatus thereof for non-random-access channel switching in a non-terrestrial network, wherein said method is configured to be executed by a terminal device, the method comprising: determining path loss change information before and after switching of the terminal device; determining the transmission power of an uplink signal with the target network device according to said path loss change information. Thus the terminal device determines the transmission power of the uplink signal, thereby avoiding the situation that the transmission power of the uplink signal is too small, such that the target network device can reliably receive the uplink signal while interference of other network devices by the uplink signal is avoided, reducing the power consumption of the terminal device and improving the performance of the terminal device.

determining path loss change information of the terminal device before and after the handover — 21

↓

adjusting a transmission power of an uplink signal to a target network device according to the path loss change information — 22

FIG. 2

**Description**

**FIELD**

The present disclosure relates to the field of communication technology, and more particularly to a method and device for a random access channel less handover in a non-terrestrial network.

**BACKGROUND**

The spatial position of a satellite in a non-terrestrial network (NTN) changes dynamically over time, so even if the position of a terminal device does not change, the terminal device still needs to perform handover frequently due to the movement of the satellite. However, due to the wide coverage of the NTN network, if a large number of terminal devices perform random access channel (RACH) handover (HO) at the same time, it may cause a large amount of signaling loads, which may lead to wireless link failure.

**SUMMARY**

Embodiments of the present disclosure provide a method and device for a random access channel less handover in a non-terrestrial network, which is applicable to a positioning service in a communication system. Path loss change information of a terminal device before and after the handover is determined, and the terminal device determines a transmission power of an uplink signal to a target network device according to the path loss change information, so as to not only ensure that the target network device can reliably receive the uplink signal, but also avoid the interference of the uplink signal on other network devices.

In a first aspect, embodiments of the present disclosure provide a method for a random access channel less handover in a non-terrestrial network, which is performed by a terminal device, and includes: determining path loss change information of the terminal device before and after the handover; and determining a transmission power of an uplink signal to a target network device according to the path loss change information.

In embodiments of the present disclosure, the terminal device first determines the path loss change information of the terminal device before and after the handover, and then determines the transmission power of the uplink signal to the target network device according to the path loss change information, so as to avoid the transmission power of the uplink signal being too low and enable the target network device to reliably receive the uplink signal, avoid the interference of the uplink signal on other network devices, reduce the power consumption of the terminal device, and improve the performance of the terminal device.

Optionally, determining the path loss change information of the terminal device before and after the handover includes: determining the path loss change information of the terminal device before and after the random access channel less handover (RACH-less HO) according to first indication information sent by a network device; or determining the path loss change information of the terminal device before and after the RACH-less HO according to an ephemeris of a satellite before the handover, an ephemeris of a satellite after the handover, position information of the terminal device before the handover, and position information of the terminal device after the handover.

Optionally, the method further includes: receiving the first indication information sent by a source network device; or receiving the first indication information sent by the target network device via the source network device.

Optionally, determining the path loss change information of the terminal device before and after the RACH-less HO according to the ephemeris of the satellite before the handover, the ephemeris of the satellite after the handover, the position information of the terminal device before the handover and the position information of the terminal device after the handover includes: determining position information of the satellite before the handover and position information of the satellite after the handover according to the ephemeris of the satellite before the handover and the ephemeris of the satellite after the handover; determining a variation in length of service links before and after the handover according to the position information of the satellite before the handover, the position information of the satellite after the handover, the position information of the terminal device before the handover, and the position information of the terminal device after the handover; and determining the path loss change information before and after the RACH-less HO by using a preset path loss model according to the variation in length of the service links and a variation in frequency before and after the handover.

Optionally, the method further includes: receiving second indication information sent by the network device, or determining the preset path loss model according to a free space path loss model. The second indication information is used to indicate the preset path loss model.

Optionally, the path loss change information includes at least one of: a path loss variation, an adjustment value of the transmission power of the uplink signal, or an amplification factor of a satellite after the handover.

Optionally, the method further includes: determining timing advance information according to an ephemeris of a satellite before the handover, an ephemeris of a satellite after the handover, position information of the terminal device before the handover, and position information of the terminal device after the handover.

In a second aspect, embodiments of the present disclosure provide a method for a random access channel less handover in a non-terrestrial network, which is performed by a source network device, and includes: determining path loss change information of a terminal device before and after the handover; and sending first indication information to the terminal device. The first indication information is used to indicate the path loss change information of the terminal device before and after the handover.

In embodiments of the present disclosure, the source network device first determines the path loss change information of the terminal device before and after the handover, and then sends to the terminal device the first indication information for indicating the path loss change information of the terminal device before and after the handover, so that the terminal device is able to determine the transmission power of the uplink signal to the target network device according to the path loss change information, so as to avoid the transmission power of the uplink signal being too low and enable the target network device to reliably receive the uplink signal, avoid the interference of the uplink signal on other network devices, reduce the power consumption of the terminal device, and improve the performance of the terminal device.

Optionally, determining the path loss change information of the terminal device before and after the handover includes: receiving the path loss change information of the terminal device before and after the random access channel less handover (RACH-less HO) sent by a target network device; or determining the path loss change information of the terminal device before and after the RACH-less HO according to a path loss value of a first feeder link corresponding to the source network device and a path loss value of a second feeder link sent by the target network device.

Optionally, the method further includes: sending the path loss value of the first feeder link to the target network device.

In a third aspect, embodiments of the present disclosure provide a method for a random access channel less handover in a non-terrestrial network, which is performed by a target network device, and includes: determining path loss change information of a terminal device before and after the handover; and sending the path loss change information to a source network device.

In embodiments of the present disclosure, the target network device first determines the path loss change information of the terminal device before and after the handover, and then sends the path loss change information to the source network device, and the source network device forwards the path loss change information to the terminal device, so that the terminal device is able to determine the transmission power of the uplink signal to the target network device according to the path loss change information, so as to avoid the transmission power of the uplink signal being too low and enable the target network device to reliably receive the uplink signal, avoid the interference of the uplink signal on other network devices, reduce the power consumption of the terminal device, and improve the performance of the terminal device.

Optionally, determining the path loss change information of the terminal device before and after the handover includes: receiving a path loss value of a first feeder link sent by the source network device; and determining the path loss change information of the terminal device before and after the random access channel less handover (RACH-less HO) according to the path loss value of the first feeder link and a path loss value of a second feeder link corresponding to the target network device.

In a fourth aspect, embodiments of the present disclosure provide a communication device, which has some or all of functions of the terminal device for implementing the method as described in the first aspect above. For example, the communication device may have functions as described in some or all the embodiments in the present disclosure, or may have functions to separately implement any of embodiments in the present disclosure. The functions may be implemented by hardware, or may be implemented by executing corresponding software on the hardware. The hardware or the software includes one or more elements or modules corresponding to the above functions.

In a fifth aspect, embodiments of the present disclosure provide a communication device, which has some or all of functions of the source network device for implementing the method as described in the second aspect above. For example, the communication device may have functions as described in some or all the embodiments in the present disclosure, or may have functions to separately implement any of embodiments in the present disclosure. The functions may be implemented by hardware, or may be implemented by executing corresponding software on the hardware. The hardware or the software includes one or more elements or modules corresponding to the above functions.

In a sixth aspect, embodiments of the present disclosure provide a communication device, which has some or all of functions of the target network device for implementing the method as described in the second aspect above. For example, the communication device may have functions as described in some or all the embodiments in the present disclosure, or may have functions to separately implement any of embodiments in the present disclosure. The functions may be implemented by hardware, or may be implemented by executing corresponding software on the hardware. The hardware or the software includes one or more elements or modules corresponding to the above functions.

In an implementation, the structure of each of the above devices may include a transceiving module and a processing module, and the processing module is configured to support the device to perform corresponding functions in the above methods. The transceiving module is used to support the communication between the device and other devices. The device may further include a storage module, which is coupled with the transceiving module and the processing module, and stores computer programs and data necessary for the communication device.

As an example, the processing module may be a processor, the transceiving module may be a transceiver or a communication interface, and the storage module may be a memory.

In a seventh aspect, embodiments of the present disclosure provide a communication device, which includes a processor that, when invoking computer programs in a memory, performs the method described in the first aspect above.

In an eighth aspect, embodiments of the present disclosure provide a communication device, which includes a processor that, when invoking computer programs in a memory, performs the method described in the second aspect above.

In a ninth aspect, embodiments of the present disclosure provide a communication device, which includes a processor that, when invoking computer programs in a memory, performs the method described in the third aspect above.

In a tenth aspect, embodiments of the present disclosure provide a communication device, which includes a processor; and a memory having stored therein computer programs. The processor, when executing the computer programs stored in the memory, causes the communication device to perform the method described in the first aspect above.

In an eleventh aspect, embodiments of the present disclosure provide a communication device, which includes a processor; and a memory having stored therein computer programs. The processor, when executing the computer programs stored in the memory, causes the communication device to perform the method described in the second aspect above.

In a twelfth aspect, embodiments of the present disclosure provide a communication device, which includes a processor; and a memory having stored therein computer programs. The processor, when executing the computer programs stored in the memory, causes the communication device to perform the method described in the third aspect above.

In a thirteenth aspect, embodiments of the present disclosure provide a computer-readable storage medium having stored therein instructions to be used by the terminal device above, and the instructions, when executed, cause the terminal device to perform the method described in the first aspect above.

In a fourteenth aspect, embodiments of the present disclosure provide a computer-readable storage medium having stored therein instructions to be used by the source network device above, and the instructions, when executed, cause the network device to perform the method described in the second aspect above.

In a fifteenth aspect, embodiments of the present disclosure provide a computer-readable storage medium having stored therein instructions to be used by the target network device above, and the instructions, when executed, cause the network device to perform the method described in the third aspect above.

In a sixteenth aspect, the present disclosure further provides a computer program product, which includes computer programs that, when run on a computer, cause the computer to perform the method described in the first aspect above.

In a seventeenth aspect, the present disclosure further provides a computer program product, which includes computer programs that, when run on a computer, cause the computer to perform the method described in the second aspect above.

In an eighteenth aspect, the present disclosure further provides a computer program product, which includes computer programs that, when run on a computer, cause the computer to perform the method described in the third aspect above.

In a nineteenth aspect, the present disclosure provides a chip system, which includes at least one processor and at least one interface, for supporting the terminal device to implement functions involved in the first aspect, for example, to determine or process at least one of data and information involved in the above method. In a possible design, the chip system further includes a memory for storing computer programs and data necessary for the terminal device. The chip system may consist of chips, or may include chips and other discrete devices.

In a twentieth aspect, the present disclosure provides a chip system, which includes at least one processor and at least one interface, for supporting the source network device to implement functions involved in the second aspect, for example, to determine or process at least one of data and information involved in the above method. In a possible design, the chip system further includes a memory for storing computer programs and data necessary for the network device. The chip system may consist of chips, or may include chips and other discrete devices.

In a twenty-first aspect, the present disclosure provides a chip system, which includes at least one processor and at least one interface, for supporting the target network device to implement functions involved in the third aspect, for example, to determine or process at least one of data and information involved in the above method. In a possible design, the chip system further includes a memory for storing computer programs and data necessary for the network device. The chip system may consist of chips, or may include chips and other discrete devices.

In a twenty-second aspect, the present disclosure provides a computer program that, when run on a computer, causes the computer to perform the method described in the first aspect above.

In a twenty-third aspect, the present disclosure provides a computer program that, when run on a computer, causes the computer to perform the method described in the second aspect above.

In a twenty-fourth aspect, the present disclosure provides a computer program that, when run on a computer, causes the computer to perform the method described in the third aspect above.

## BRIEF DESCRIPTION OF THE DRAWINGS

In order to clearly illustrate the technical solutions in embodiments of the present disclosure or in the related art, drawings applicable to embodiments of the present disclosure or the related art are described below.

FIG. 1 is a schematic architecture diagram of a communication system according to embodiments of the present disclosure;

FIG. 2 is a schematic flowchart of a method for a random access channel less handover in a non-terrestrial network according to embodiments of the present disclosure;

FIG. 3 is a schematic flowchart of a method for a random access channel less handover in a non-terrestrial network according to embodiments of the present disclosure;

FIG. 4 is a schematic flowchart of a method for a random access channel less handover in a non-terrestrial network according to embodiments of the present disclosure;

FIG. 5 is a schematic flowchart of a method for a random access channel less handover in a non-terrestrial network according to embodiments of the present disclosure;

FIG. 6 is a schematic flowchart of a method for a random access channel less handover in a non-terrestrial network according to embodiments of the present disclosure;

FIG. 7 is a schematic flowchart of a method for a random access channel less handover in a non-terrestrial network according to embodiments of the present disclosure;

FIG. 8 is a schematic flowchart of a method for a random access channel less handover in a non-terrestrial network according to embodiments of the present disclosure;

FIG. 9 is a schematic flowchart of a method for a random access channel less handover in a non-terrestrial network according to embodiments of the present disclosure;

FIG. 10 is a schematic diagram showing signaling interactions in a method for a random access channel less handover in a non-terrestrial network according to embodiments of the present disclosure;

FIG. 11 is a schematic block diagram of a communication device according to embodiments of the present disclosure;

FIG. 12 is a schematic block diagram of another communication device according to embodiments of the present disclosure; and

FIG. 13 is a schematic block diagram of a chip according to embodiments of the present disclosure.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects of the present disclosure as recited in the appended claims.

It can be understood that the phrase "a plurality of' in the present disclosure refers to two or more, and other quantifiers are similar thereto. The term "and/or" describes an association relationship of associated objects, indicating that three relationships may exist, for example, the expression "A and/or B" may include the following three cases: A alone, B alone, and both A and B. The character "/" generally indicates an "or" relationship of the associated objects. The singular forms "a/an", "said" and "the" are intended to include plural forms, unless clearly indicated in the context otherwise.

For ease of understanding, terms involved in the present disclosure are firstly introduced.

1. Non-Terrestrial Network (NTN)

Satellite communication has characteristics of wide coverage, strong disaster resistance and large capacity. The NTN scenario may include a scenario based on a geostationary earth orbiting (GEO) satellite and a scenario based on a non-geostationary earth orbiting (NGSO) satellite. The NTN network includes two architectures, i.e., a transparent architecture and a regenerative architecture. The transparent architecture means that a satellite has a transparent forwarding function, that is, a communication between a network device and a terminal device is forwarded via a satellite.

The regenerative architecture means that a part of the structure of the network device or the entire structure of the network device is on a satellite, and the satellite has a data processing capability.

2. Random access channel less handover (RACH-less HO)

The RACH-less HO means that a terminal device does not need to send an RACH to trigger uplink synchronization of a target cell when the terminal device performs a handover of a network device serving the terminal device.

3. Service link

A wireless link between a terminal device and a satellite is usually called a service link.

4. Feeder link

A feeder link usually refers to a wireless link from a terrestrial network device to a satellite.

5. NTN network with the transparent architecture

In the NTN network with the transparent architecture, the communication between a network device and a terminal device is forwarded via a satellite, and the satellite only performs the data forwarding function, and generally does not perform data demodulation.

6. NTN network with the regenerative architecture

In the NTN network with the regenerative architecture, a part of the network device, such as a distribution unit (DU), is provided on a satellite, or the entire structure of the network device is provided on the satellite, and the satellite has a data processing capability.

In order to better understand a method for a random access channel less handover in a non-terrestrial network disclosed in embodiments of the present disclosure, the communication system to which embodiments of the present disclosure are applicable is firstly described below.

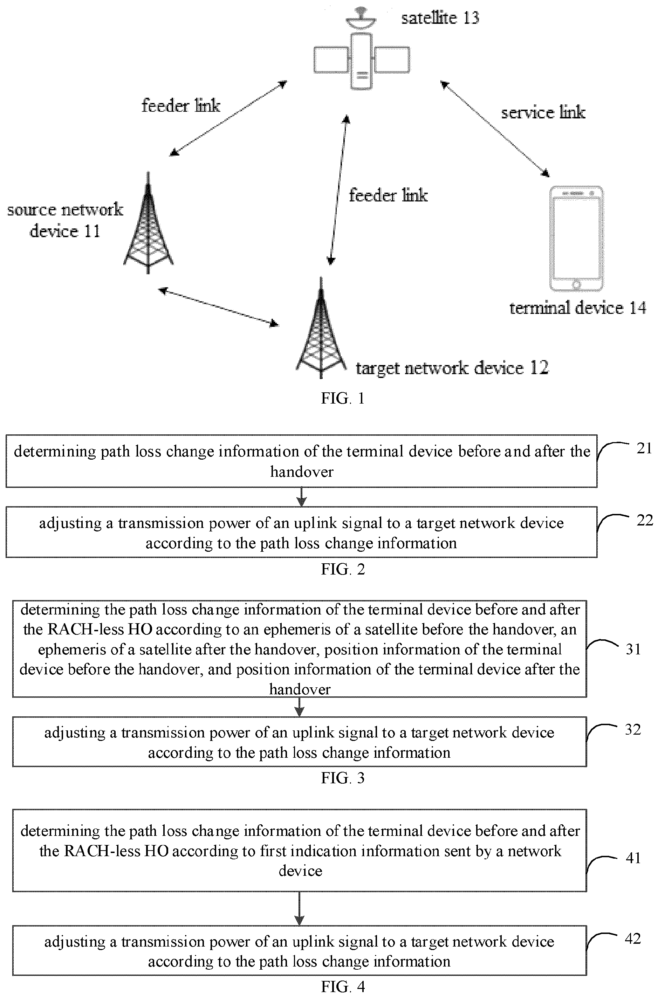

Referring to FIG. 1, FIG. 1 is a schematic architecture diagram of a communication system according to embodiments of the present disclosure. The communication system may include, but not limited to, a source network device, a target network device, a terminal device, and a satellite. As an example for illustration, FIG. 1 shows a single handover process of a terminal device, but the number and forms of devices are not limited thereto. It can be understood that, in an actual communication system, two or more source network devices, two or more terminal devices, two or more target network devices, and two or more satellites may be included.

It should be noted that the technical solutions of embodiments of the present disclosure may be applied to various communication systems, for example, a long term evolution (LTE) system, a 5th generation (5G) mobile communication system, a 5G new radio (NR) system, or other new mobile communication systems in the future. The source network device 11 and the target network device 12 in embodiments of the present disclosure are entities at a network side for sending or receiving signals. For example, the source network device 11 and the target network device 12 each may be an evolved NodeB (eNB), a next generation NodeB (gNB) in an NR system, a base station in other future mobile communication systems, or an access node in a wireless fidelity (WiFi) system. Embodiments of the present disclosure do not limit the specific technique and specific device form adopted by the network device.

The source network device 11 and the target network device 12 provided in embodiments of the present disclosure may be composed of a central unit (CU) and distributed units (DUs). The CU may also be called a control unit. The CU-DU structure allows to split protocol layers of the network device, such as the base station, functions of some of the protocol layers are centrally controlled in the CU, functions of some or all of the remaining protocol layers are distributed in the DUs, and the CU centrally controls the DUs.

The satellite 13 in embodiments of the present disclosure may be a low-orbit satellite or a high-orbit satellite, which is not limited in the present disclosure.

The terminal device 14 in embodiments of the present disclosure is an entity at a user side for receiving or sending signals, such as a mobile phone. The terminal device may also be called a terminal, a user equipment (UE), a mobile station (MS), a mobile terminal (MT), and so on. The terminal device may be a device with a communication function, such as a car, a smart car, a mobile phone, a wearable device, a tablet Pad, a computer with a wireless transceiving function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, a wireless terminal device in a smart home, etc. Embodiments of the present disclosure do not limit the technique and the device form adopted by the terminal.

It can be understood that the communication system described in embodiments of the present disclosure is intended to illustrate the technical solutions of embodiments of the present disclosure more clearly, and does not constitute a limitation on the technical solutions provided by embodiments of the present disclosure. Those of ordinary skill in the art will know that with the evolution of the system architecture and the emergence of new service scenarios, the technical solutions provided by embodiments of the present disclosure are also applicable to similar technical problems.

The present disclosure is mainly aimed at the problem that in the NTN network, a large number of terminal devices perform the RACH HO at the same time, causing excessive signaling load and wireless link failure. Considering that satellites are far away from the ground, the path loss may change before and after the RACH-less HO. For example, if the path loss is reduced after the handover, in this case, if the terminal device does not reduce a transmission power of an uplink signal, the uplink signal sent by the terminal device may interfere with the reception of signals of other network devices, and the power of the terminal device is wasted. Alternatively, the path loss increases after the handover, in this case, if the terminal device does not increase the transmission power of the uplink signal, the uplink signal sent by the terminal device may not be reliably received by the network device. Application of the random access channel less handover (RACH-less HO) in the NTN is proposed to reduce the signaling load, and the terminal device may determine the transmission power of the uplink signal according to the change of the path loss before and after the handover to avoid the interference problem and the problem that the uplink signal cannot be received reliably.

In the following, methods and devices for a random access channel less handover in a non-terrestrial network provided in the present disclosure will be described in detail with reference to the accompanying drawings.

Referring to FIG. 2, FIG. 2 is a schematic flowchart of a method for a random access channel less handover in a non-terrestrial network according to embodiments of the present disclosure. The method is configured to be performed by a terminal device. As shown in FIG. 2, the method may include but not limited to the following steps.

In step 21, path loss change information of the terminal device before and after the handover is determined.

It should be noted that in the NTN network, a distance and a delay between a satellite and the terminal device and that between the satellite and a network device are relatively large, so a path loss of a service link between the satellite and the terminal device and a path loss of a feeder link between the satellite and the network device may change greatly before and after the handover. If the terminal device does not adjust a transmission power of an uplink signal after the handover, the uplink signal sent by the terminal device may interfere with the reception of signals of other network devices, or the uplink signal may fail to be received.

In view of this, in the present disclosure, the method for the random access channel less handover in the non-terrestrial network is provided, so that when the terminal device performs the RACH-less HO, the transmission power of the uplink signal is adjusted, which avoids the occurrence of the case where the transmission power of the uplink signal sent by the terminal device after the handover is too large to cause interferences on other network devices within the coverage of the satellite, and reduces the power consumption of the terminal device, and avoids the occurrence of the case where the transmission power of the uplink signal sent by the terminal device after the handover is too small, resulting in that the uplink signal cannot be reliably received by the network device.

Optionally, the path loss change information may include at least one of a path loss variation, an adjustment value of the transmission power of the uplink signal, or an amplification factor of a satellite after the handover.

The path loss variation may be a difference between a path loss between the terminal device and a target network device after the handover and a path loss between the terminal device and a source network device before the handover. The path loss variation may be a positive value or a negative value, where the positive value indicates that the path loss increases after the handover, and the negative value indicates that the path loss decreases after the handover, which will not be limited in the present disclosure.

Optionally, the path loss change information may also include the adjustment value of the transmission power of the uplink signal. The adjustment value of the transmission power of the uplink signal is used to indicate a value to be adjusted by the terminal device to the transmission power for sending the uplink signal to the source network device before the handover, so that a transmission power for sending an uplink signal to the target network device after the handover may be determined according to the transmission power for sending the uplink signal to the source network device before the handover and the adjustment value of the transmission power of the uplink signal. The adjustment value of the transmission power of the uplink signal may be a positive value or a negative value, where the positive value indicates that the transmission power of the uplink signal needs to be increased after the handover, and the negative value indicates that the transmission power of the uplink signal needs to be decreased after the handover, which will not be limited in the present disclosure.

Usually, for the NTN network with the transparent architecture, satellites have the function of amplifying a received signal and transparently forwarding the received signal. If satellites connected to the terminal device before and after the handover do not belong to the same operator or the same satellite constellation, they may have different power amplification factors, which will also affect the transmission of signals. Therefore, if the amplification factor of the satellite changes a lot after the handover, when the terminal device calculates the adjustment value of the transmission power of the uplink signal, both the path loss variation and a variation in power amplification of satellites need to be considered. Therefore, in the present disclosure, the path loss change information may also include an amplification factor of a satellite after the handover. Optionally, the network device may send the magnification factor of the satellite after the handover via a radio resource control (RRC) signaling, so that each terminal device can obtain such value. Optionally, the network device may broadcast the magnification factor of the satellite after the handover via the RRC signaling.

In step 22, a transmission power of an uplink signal to a target network device is determined according to the path loss change information.

It can be understood that after determining the path loss change information before and after the handover, the terminal device can determine the transmission power of the uplink signal to the target network device according to the path loss change information, so that the terminal device uses the transmission power determined to transmit the uplink signal to the target network device, which not only ensures that the target network device can reliably receive the uplink signal, but also avoids the transmission power of the uplink signal to be too large to cause interferences with the reception of signals of other network devices, and reduce power consumption of the terminal device and improve the performance of the terminal device.

In all embodiments of the present disclosure, the path loss change information may be a certain value or an interval, which is not limited in embodiments of the present disclosure. Using the form of interval can undoubtedly reduce signaling overhead.

By implementing embodiments of the present disclosure, the terminal device first determines the path loss change information of the terminal device before and after the handover, and then determines the transmission power of the uplink signal to the target network device according to the path loss change information. Therefore, by adjusting the transmission power of the uplink signal, the terminal device can not only avoid the transmission power of the uplink signal being too small, and ensure that the target network device can reliably receive the uplink signal, but also avoid the interference of the uplink signal on other network devices. Further, the power consumption of the terminal device is reduced, and the performance of the terminal device is improved.

Referring to FIG. 3, FIG. 3 illustrates a method for a random access channel less handover in a non-terrestrial network according to embodiments of the present disclosure, with reference to the NTN network with the regenerative architecture as an example. Referring to FIG. 3, FIG. 3 is a schematic flowchart of another method for a random access channel less handover in a non-terrestrial network according to embodiments of the present disclosure. The method is configured to be performed by a terminal device. As shown in FIG. 3, the method may include but not limited to the following steps.

In step 31, the path loss change information of the terminal device before and after the RACH-less HO is determined according to an ephemeris of a satellite before the handover, an ephemeris of a satellite after the handover, position information of the terminal device before the handover, and position information of the terminal device after the handover.

It should be noted that for the NTN network with the regenerative architecture, since a part of the structure of the network device is provided on the satellite, and the satellite has the data processing capability, a path loss between the terminal device and the network device is equal to a path loss of the service link between the terminal device and the satellite. Therefore, in the present disclosure, the terminal device can determine the path loss change information of the terminal device before and after the RACH-less HO according to the ephemeris of the satellite before the handover, the ephemeris of the satellite after the handover, the position information of the terminal device before the handover, and the position information of the terminal device after the handover.

Optionally, since the satellite to which the terminal device is connected after the handover may be different from the satellite to which the terminal device is connected before the handover, and the position of the terminal device may also change before and after the handover, a length of a service link between the terminal device and the satellite to which the terminal device is connected after the handover may be different from a length of a service link between the terminal device and the satellite to which the terminal device is connected before the handover. Therefore, the terminal device may first determine position information of the satellite before the handover and position information of the satellite after the handover according to the ephemeris of the satellite before the handover and the ephemeris of the satellite after the handover, and then determine a variation in length of service links before and after the handover according to the position information of the satellite before the handover, the position information of the satellite after the handover, the position information of the terminal device before the handover, and the position information of the terminal device after the handover; and finally determine the path loss change information before and after the RACH-less HO by using a preset path loss model according to the variation in length of the service links and a variation in frequency before and after the handover.

That is, the terminal device is able to determine the position information of the satellite before the handover according to the ephemeris of the satellite before the handover, and determine the distance between the terminal device and the satellite before the handover according to its own position information before the handover, i.e., determine the length of the service link before the handover. After the handover, the terminal device is able to determine the position information of the satellite after the handover according to the ephemeris of the satellite after the handover, and determine the distance between the terminal device and the satellite after the handover according to its own position information after the handover, i.e., determine the length of the service link after the handover. Afterwards, the variation in length of the service links before and after the handover can be calculated, and the path loss change information before and after the handover can be determined according to the variation in frequency of wireless links used before and after the handover.

Optionally, the path loss model may be configured by the network device to the terminal device. That is, the terminal device may receive second indication information sent by the network device, and the second indication information is used to indicate the preset path loss model. Alternatively, the path loss model may be determined by the terminal device according to a preset rule. For example, the terminal device may determine the preset path loss model according to a free space path loss model.

In step 32, a transmission power of an uplink signal to a target network device is determined according to the path loss change information.

For the implementations of the step 32, reference may be made to the detailed descriptions in other embodiments of the present disclosure, which will not be repeated here.

By implementing embodiments of the present disclosure, the terminal device determines the path loss change information of the terminal device before and after the RACH-less HO according to the ephemeris of the satellite before the handover, the ephemeris of the satellite after the handover, the position information of the terminal device before the handover, and the position information of the terminal device after the handover, and determines the transmission power of the uplink signal to the target network device according to the path loss change information. Therefore, the terminal device is able to determine the path loss change information before and after the handover by itself, and then adjust the transmission power of the uplink signal to the target network device, so as to not only avoid the transmission power of the uplink signal being too small, and ensure that the target network device can reliably receive the uplink signal, but also avoid the interference of the uplink signal on other network devices. Further, the power consumption of the terminal device is reduced, the performance of the terminal device is improved, and the signaling load of the network device is reduced.

Referring to FIG. 4, FIG. 4 illustrates a method for a random access channel less handover in a non-terrestrial network according to embodiments of the present disclosure, with reference to the NTN network with the transparent architecture as an example. Referring to FIG. 4, FIG. 4 is a schematic flowchart of another method for a random access channel less handover in a non-terrestrial network according to embodiments of the present disclosure. The method is configured to be performed by a terminal device. As shown in FIG. 4, the method may include but not limited to the following steps.

In step 41, the path loss change information of the terminal device before and after the RACH-less HO is determined according to first indication information sent by a network device.

It should be noted that for the NTN network with the transparent architecture, since satellites only have the transparently forwarding function, a path loss between the terminal device and the network device includes a path loss of a service link between the terminal device and a satellite and a path loss of a feeder link between the satellite and the network device. However, since the terminal device can only determine the path loss of the service link between the terminal device and the satellite, but cannot determine the path loss of the feeder link between the satellite and the network device, it needs the network device to determine the path loss change information in feeder link between the network device and the satellite before and after the handover, and the terminal device receives the indication from the network device to determine the path loss change information before and after the handover.

Optionally, the terminal device may receive the first indication information sent by the source network device.

That is, in some possible implementations, the target network device first sends a path loss value of a feeder link corresponding to the target network device to the source network device, and then the source network device determines the path loss change information in feeder link before and after the RACH-less HO of the terminal device according to a path loss value of a feeder link corresponding to itself and the path loss value of the feeder link corresponding to the target network device received, and sends the path loss change information in feeder link to the terminal device in the first indication information.

Alternatively, the terminal device may receive the first indication information sent by the target network device via the source network device. The first indication information is used to indicate the path loss change information of the terminal device before and after the RACH-less HO.

That is, in some possible implementations, the source network device sends the path loss value of the feeder link corresponding to the source network device to the target network device, and the target network device determines the path loss change information in feeder link before and after the RACH-less HO of the terminal device according to the path loss value of the feeder link corresponding to itself and the path loss value of the feeder link corresponding to the source network device received. Afterwards, the target network device sends the path loss change information to the source network device, and the source network device forwards the path loss change information to the terminal device. Alternatively, the target network device determines the path loss change information, and then sends the path loss change information to the terminal device in the RACH-less HO process or in any other feasible way. In another implementation, the terminal device reports the path loss of the service link between the terminal device and the satellite to the source network device or the target network device, and then the source network device or the target network device determines the path loss change information, and sends the path loss change information to the terminal device in any feasible way.

Optionally, the target network device may send the path loss change information in feeder link between the target network device and the satellite to the source network device via an HO request acknowledge message.

Of course, in all implementations of the present disclosure, the first indication information may include the path loss value of the feeder link corresponding to the source network device and the path loss value of the feeder link corresponding to the target network device, and the terminal device determines the path loss change information in feeder link, which will not be repeated here.

In step 42, a transmission power of an uplink signal to a target network device is determined according to the path loss change information.

It should be noted that after receiving the path loss change information corresponding to feeder link, the terminal device may determine the transmission power of the uplink signal to the target network device in combination with the path loss change information corresponding to service link determined by itself. Further, the terminal device may use the transmission power of the uplink signal to communicate with the target network device according to the determined transmission power of the uplink signal.

For specific implementations of the step 42, reference may be made to the detailed descriptions in other embodiments of the present disclosure, which will not be repeated here.

By implementing embodiments of the present disclosure, the terminal device determines the path loss change information of the terminal device before and after the RACH-less HO according to the first indication information sent by the network device, and then determines the transmission power of the uplink signal to the target network device according to the path loss change information. In this way, the terminal device is able to determine the transmission power of the uplink signal to the target network device according to the path loss change information sent by the network device, so as to not only avoid the transmission power of the uplink signal being too small, and ensure that the target network device can reliably receive the uplink signal, but also avoid the interference of the uplink signal on other network devices. Further, the power consumption of the terminal device is reduced, and the performance of the terminal device is improved.

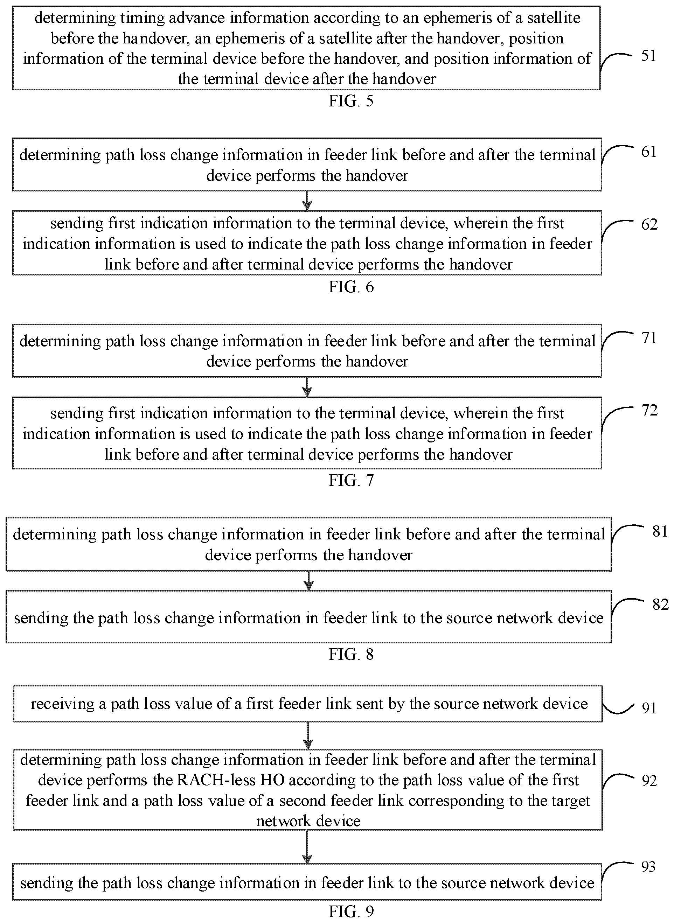

Referring to FIG. 5, FIG. 5 is a schematic flowchart of another method for a random access channel less handover in a non-terrestrial network according to embodiments of the present disclosure. The method is configured to be performed by a terminal device. As shown in FIG. 5, the method may include but not limited to the following steps.

In step 51, timing advance information is determined according to an ephemeris of a satellite before the handover, an ephemeris of a satellite after the handover, position information of the terminal device before the handover, and position information of the terminal device after the handover.

The timing advance (TA) information is used for uplink transmission of the terminal device, and is a negative offset between a starting time of receiving a downlink subframe by the terminal device and a starting time of transmitting an uplink subframe by the terminal device. In order to ensure the orthogonality of uplink transmissions, the network device requires that signals from different terminal devices in the same subframe but different frequency domain resources arrive at the network device at a substantially aligned time. In order to ensure the time synchronization of the network device (receiving side), the terminal device side needs to perform uplink time pre-compensation, i.e., the timing advance.

Optionally, the terminal device may determine the timing advance information according to the ephemeris of the satellite before the handover, the ephemeris of the satellite after the handover, the position information of the terminal device before the handover, the position information of the terminal device after the handover, and broadcast messages received from the target network device, such as a common TA, a common TA drift rate, and a common TA drift rate variation. A formula for calculating the timing advance TA is as follows:

$$T_{TA} = \left( N_{TA} + N_{TA, UE-specific} + N_{TA, common} + N_{TA, offset} \right) \times T_c,$$

where $T_{TA}$ is the timing advance; $N_{TA}$ is calculated based on a second message (Msg2)/message B (MsgB) and a TA command of a medium access control (MAC) control unit (CE), and is defined as 0 in a physical random access channel (PRACH); $N_{TA,UE-specific}$ is a delay measured by the terminal device according to satellite ephemeris and positioning through a global navigation satellite system (GNSS); $N_{TA,common}$ is a delay from a satellite to a reference point (RP), and is calculated by the terminal device according to a broadcast message sent by the target network device, and it is supported that $N_{TA,common}$ is equal to 0 (i.e., the RP is on the satellite); $N_{TA,offset}$ is a fixed offset; and Tc is a time unit, and its value may be 1/(480K*4096).

The step 51 in embodiments of the present disclosure may be performed alone, or may be performed together with steps in other embodiments. By implementing embodiments of the present disclosure, the terminal device is able to determine the timing advance information according to the ephemeris of the satellite before the handover, the ephemeris of the satellite after the handover, the position information of the terminal device before the handover, and the position information of the terminal device after the handover. In this way, the terminal device is able to determine the timing advance information by itself without an indication from the network device, so that the signaling load of the network device can be reduced.

Referring to FIG. 6, FIG. 6 is a schematic flowchart of another method for a random access channel less handover in a non-terrestrial network according to embodiments of the present disclosure. The method is configured to be performed by a source network device. As shown in FIG. 6, the method may include but not limited to the following steps.

In step 61, path loss change information in feeder link before and after a terminal device performs the handover is determined.

It should be noted that for the NTN network with the transparent architecture, since satellites only have the transparently forwarding function, a path loss between the terminal device and a network device includes a path loss of a service link between the terminal device and a satellite and a path loss of a feeder link between the satellite and the network device. However, since the terminal device can only determine the path loss of the service link between the terminal device and the satellite, but cannot determine the path loss of the feeder link between the satellite and the network device, path loss change information in feeder link between the network device and the satellite before and after the handover is determined by the source network device and sent to the terminal device, and the terminal device determines the path loss change information in feeder link before and after the handover according to an indication received from the network device.

Optionally, the path loss change information in feeder link may include a path loss variation in feeder link. The path loss variation in feeder link may be a difference between a path loss of a second feeder link corresponding to the target network device after the terminal device performs the handover and a path loss of a first feeder link corresponding to the source network device before the handover. The path loss variation in feeder link may be a positive value or a negative value, where the positive value indicates that the path loss increases, and the negative value indicates that the path loss decreases, which are not limited in the present disclosure.

The first feeder link is a wireless link between the source network device and a satellite to which the source network device is connected. The second feeder link is a wireless link between the target network device and a satellite to which the target network device is connected. In all embodiments of the present disclosure, the path loss change information in feeder link may be a certain value or an interval, which is not limited in embodiments of the present disclosure. Using the form of interval can undoubtedly reduce signaling overhead.

Optionally, the path loss change information in feeder link may also include an adjustment value of a transmission power of an uplink signal. The adjustment value of the transmission power of the uplink signal may be a value for adjusting the transmission power used by the terminal device to send the uplink signal to the source network device before the handover. The adjustment value of the transmission power of the uplink signal may be a positive value or a negative value, where the positive value indicates that the transmission power of the uplink signal needs to be increased, and the negative value indicates that the transmission power of the uplink signal needs to be decreased, which will not be limited in the present disclosure.

Usually, for the NTN network with the transparent architecture, satellites have the function of amplifying a received signal and transparently forwarding the received signal. If satellites connected to the terminal device before and after the handover do not belong to the same operator or the same satellite constellation, they may have different power amplification factors, which will also affect the transmission of signals. Therefore, if the amplification factor of the satellite changes a lot after the handover, when the terminal device calculates the adjustment value of the transmission power of the uplink signal, both the path loss variation and a variation in power amplification of satellites need to be considered. Therefore, in the present disclosure, the path loss change information may also include an amplification factor of a satellite after the handover. Optionally, the network device may send the magnification factor of the satellite after the handover via a radio resource control (RRC) signaling, so that each terminal device can obtain such value.

In step 62, first indication information is sent to the terminal device. The first indication information is used to indicate the path loss change information in feeder link before and after the terminal device performs the handover.

In the above step 61 and step 62, it is also possible that the source network device sends the path loss value of the feeder link corresponding to the source network device and the path loss value of the feeder link corresponding to the target network device to the terminal device, and the terminal device determines the path loss change information in feeder link, which will not be repeated here.

It can be understood that after the source network device determines the path loss change information in feeder link before and after the terminal device performs the handover, the source network device can send the path loss change information in feeder link to the terminal device via the first indication information, and the terminal device can determine the transmission power of the uplink signal to the target network device according to the path loss change information in feeder link and the path loss change information in service link determined by itself, so as to not only avoid the transmission power of the uplink signal being too small, and ensure that the target network device can reliably receive the uplink signal, but also avoid the transmission power of the uplink signal being too large to cause interference on the reception of signals of other network devices. Further, the power consumption of the terminal device is reduced, and the performance of the terminal device is improved.

In a possible implementation, the source network device may receive the path loss of the service link sent by the terminal device, determine the path loss change information according to the path loss change information in feeder link and the path loss change information in service link, and send the path loss change information to the terminal device. That is, the source network device may send the path loss change information in feeder link, or send the path loss change information after receiving the path loss change information in service link sent by the terminal device.

The above examples may include that the source network device receives the path loss change information in service link sent by the terminal device, and the source network device receives the path loss of the second feeder link sent by the target network device; and the source network device determines the path loss change information of the terminal device according to the path loss of the first feeder link, the path loss of the second feeder link, and the path loss change information in service link.

In this way, the source network device is able to comprehensively consider network situations to determine the path loss change information of the terminal device, and better schedule the terminal device.

By implementing embodiments of the present disclosure, the source network device first determines the path loss change information of the terminal device before and after the handover or the path loss change information in feeder link; and then sends to the terminal device the first indication information for indicating the path loss change information of the terminal device before and after the handover or the path loss change information in feeder link; or sends the path loss change information of the terminal device before and after the handover or the path loss change information in feeder link to the terminal device. Therefore, the terminal device can adjust the transmission power of the uplink signal to the target network device according to the path loss change information, so as to not only avoid the transmission power of the uplink signal being too small, and ensure that the target network device can reliably receive the uplink signal, but also avoid the interference of the uplink signal on other network devices. Further, the power consumption of the terminal device is reduced, and the performance of the terminal device is improved.

Referring to FIG. 7, FIG. 7 is a schematic flowchart of another method for a random access channel less handover in a non-terrestrial network according to embodiments of the present disclosure. The method is configured to be performed by a source network device. As shown in FIG. 7, the method may include but not limited to the following steps.

In step 71, path loss change information in feeder link before and after a terminal device performs the handover is determined.

Optionally, the source network device may receive the path loss change information in feeder link before and after the terminal device performs the random access channel less handover (RACH-less HO) sent by the target network device.

Optionally, the source network device may send the path loss value of the first feeder link corresponding to the source network device to the target network device, and the target network device determines the path loss change information in feeder link before and after the terminal device performs the RACH-less HO according to the path loss value of the second feeder link corresponding to itself and the path loss value of the first feeder link received, and sends the path loss change information in feeder link to the source network device.

Alternatively, the source network device may determine the path loss change information in feeder link before and after the terminal device performs the RACH-less HO according to the path loss value of the first feeder link corresponding to the source network device and the path loss value of the second feeder link sent by the target network device.

That is, the target network device sends the path loss value of the second feeder link corresponding to the target network device to the source network device, and the source network device determines the path loss change information in feeder link before and after the terminal device performs the RACH-less HO according to the path loss value of the first feeder link corresponding to the source network device and the path loss value of the second feeder link received.

Optionally, the source network device may receive the path loss of the service link sent by the terminal device, and determine the path loss change information according to the path loss change information in feeder link and the path loss change information in service link; and send the path loss change information to the terminal device. That is, the source network device may send the path loss change information in feeder link, or send total path loss change information after receiving the path loss change information in service link sent by the terminal device. In this way, the source network device can comprehensively consider network situations to determine the path loss change information of the terminal device, and better schedule the terminal device. The path loss change information in feeder link may be determined by the source network device or the target network device, or may be determined through negotiation between the source network device and the target network device. The path loss change information of the terminal device may be determined by the source network device or the target network device, or may be determined through negotiation between the source network device and the target network device.

In step 72, first indication information is sent to the terminal device. The first indication information is used to indicate the path loss change information in feeder link before and after the terminal device performs the handover.

For the specific implementation of the step 72, reference may be made to the detailed descriptions in other

**EP 4 460 112 A1**

embodiments of the present disclosure, which will not be repeated here.

In step 71 and step 72, the source network device may also send the path loss value of the feeder link corresponding to the source network device and the path loss value of the feeder link corresponding to the target network device to the terminal device, and the terminal device determines the path loss change information in feeder link, which will not be repeated here.

By implementing embodiments of the present disclosure, the source network device determines the path loss change information of the terminal device or the path loss change information in feeder link before and after the handover, and sends to the terminal device the first indication information for indicating the path loss change information of the terminal device or the path loss change information in feeder link before and after the handover. Therefore, the terminal device can adjust the transmission power of the uplink signal to the target network device according to the path loss change information, so as to not only avoid the transmission power of the uplink signal being too small, and ensure that the target network device can reliably receive the uplink signal, but also avoid the interference of the uplink signal on other network devices. Further, the power consumption of the terminal device is reduced, and the performance of the terminal device is improved.

Referring to FIG. 8, FIG. 8 is a schematic flowchart of another method for a random access channel less handover in a non-terrestrial network according to embodiments of the present disclosure. The method is configured to be performed by a target network device. As shown in FIG. 8, the method may include but not limited to the following steps.

In step 81, path loss change information in feeder link before and after a terminal device performs the handover is determined.

It should be noted that, for the NTN network with the transparent architecture, the target network device may determine the path loss change information in feeder link between the satellite and the network device before and after the terminal device performs the handover, and then send the path loss change information in feeder link to the source network device, the source network device forwards the path loss change information in feeder link before and after the handover to the terminal device.

Optionally, the path loss change information may include a path loss variation in feeder link. The path loss variation in feeder link may be a difference between a path loss of a second feeder link corresponding to the target network device after the terminal device performs the handover and a path loss of a first feeder link corresponding to the source network device before the handover. The path loss variation in feeder link may be a positive value or a negative value, where the positive value indicates that the path loss increases, and the negative value indicates that the path loss decreases, which are not limited in the present disclosure.

The first feeder link is a wireless link between the source network device and a satellite to which the source network device is connected. The second feeder link is a wireless link between the target network device and a satellite to which the target network device is connected.

Optionally, the path loss change information in feeder link may also include an adjustment value of a transmission power of an uplink signal. The adjustment value of the transmission power of the uplink signal may be a value for adjusting the transmission power used by the terminal device to send the uplink signal to the source network device before the handover. The adjustment value of the transmission power of the uplink signal may be a positive value or a negative value, where the positive value indicates that the transmission power of the uplink signal needs to be increased, and the negative value indicates that the transmission power of the uplink signal needs to be decreased, which will not be limited in the present disclosure.

Optionally, the path loss change information in feeder link may also include a magnification factor of a satellite after the handover. Optionally, the network device may broadcast the magnification factor of the satellite after the handover via a radio resource control (RRC) signaling, so that each terminal device can obtain such value.

In step 82, the path loss change information in feeder link is sent to the source network device.

It should be noted that since the terminal device has not yet established a connection to the target network device before sending an uplink signal to the target network device, the target network device needs to send the determined path loss change information in feeder link to the source network device, and the source network device forwards the path loss change information in feeder link to the terminal device. The terminal device can determine the transmission power of the uplink signal to the target network device according to the path loss change information in feeder link and the path loss change information in service link determined by itself, so as to not only avoid the transmission power of the uplink signal being too small, and ensure that the target network device can reliably receive the uplink signal, but also avoid the transmission power of the uplink signal being too large to cause interference on the reception of signals of other network devices. Further, the power consumption of the terminal device is reduced, and the performance of the terminal device is improved.

In a possible implementation, the terminal device may receive the path loss change information in feeder link from the target network device during the process of accessing the target network device. That is, the above step 82 may be modified as: sending the path loss change information in feeder link to the terminal device.

Optionally, the target network device may receive a path loss of a service link sent by the terminal device, and determine the path loss change information according to the path loss change information in feeder link and path loss change information in service link; and send the path loss change information to the terminal device. That is, the target network device may send the path loss change information in feeder link, or send the path loss change information after receiving the path loss change information in service link from the terminal device. In a possible implementation, during the process of the terminal device accessing the target network device, the target network device may send the path loss change information in feeder link or the path loss change information to the terminal device. Regarding such a concept, reference may be made to the detailed description in embodiments shown in FIG. 6, except for that the executive subject becomes the target network device, and details are not repeated here.

In the above step 81 and step 82, it is also possible that the target network device sends the path loss value of the feeder link corresponding to the source network device and the path loss value of the feeder link corresponding to the target network device to the terminal device, and the terminal device determines the path loss change information in feeder link, which will not be repeated here.

By implementing embodiments of the present disclosure, the target network device determines the path loss change information of the terminal device or the path loss change information in feeder link before and after the handover, and sends the path loss change information or the path loss change information in feeder link to the source network device; and the source network device forwards the path loss change information or the path loss change information in feeder link to the terminal device. Therefore, the terminal device can adjust the transmission power of the uplink signal to the target network device according to the path loss change information, so as to not only avoid the transmission power of the uplink signal being too small, and ensure that the target network device can reliably receive the uplink signal, but also avoid the interference of the uplink signal on other network devices. Further, the power consumption of the terminal device is reduced, and the performance of the terminal device is improved.

Referring to FIG. 9, FIG. 9 is a schematic flowchart of another method for a random access channel less handover in a non-terrestrial network according to embodiments of the present disclosure. The method is configured to be performed by a target network device. As shown in FIG. 9, the method may include but not limited to the following steps.

In step 91, a path loss value of a first feeder link sent by a source network device is received.

It should be noted that if the path loss change information in feeder link between the satellite and the network device before and after the terminal device performs the handover is determined by the target network device, the source network device needs to send the path loss value of the first feeder link corresponding to itself to the target network device.

In step 92, the path loss change information in feeder link before and after the terminal device performs the RACH-less HO is determined according to the path loss value of the first feeder link and a path loss value of a second feeder link corresponding to the target network device.

It can be understood that, after receiving the path loss value of the first feeder link sent by the source network device, the target network device may determine the path loss change information before and after the terminal device performs the RACH-less HO according to the path loss value of the second feeder link corresponding to the target network device.

In step 93, the path loss change information in feeder link is sent to the source network device.

For the specific implementation of the step 93, reference may be made to the detailed descriptions in other embodiments of the present disclosure, which will not be repeated here.

In a possible implementation, the terminal device may receive the path loss change information in feeder link from the target network device during the process of accessing the target network device. That is, the above step 93 can be modified as: sending the path loss change information in feeder link to the terminal device.

Optionally, the target network device may receive a path loss of a service link sent by the terminal device, and determine the path loss change information according to the path loss change information in feeder link and path loss change information in service link; and send the path loss change information to the terminal device. That is, the target network device may send the path loss change information in feeder link, or send the path loss change information after receiving the path loss change information in service link from the terminal device. In a possible implementation, during the process of the terminal device accessing the target network device, the target network device may send the path loss change information in feeder link or the path loss change information to the terminal device. Regarding such a concept, reference may be made to the detailed description in embodiments shown in FIG. 6, except for that the executive subject becomes the target network device, and details are not repeated here.

In the above step 92 and step 93, it is also possible that the target network device sends the path loss value of the feeder link corresponding to the source network device and the path loss value of the feeder link corresponding to the target network device to the terminal device, and the terminal device determines the path loss change information in feeder link, which will not be repeated here.

By implementing embodiments of the present disclosure, the target network device receives the path loss value of the first feeder link sent by the source network device, and determines the path loss change information before and after the terminal device performs the RACH-less HO according to the path loss value of the first feeder link and the path loss value of the second feeder link corresponding to the target network device, and send the path loss change information to the source network device. The source network device forwards the path loss change information to the terminal device. Therefore, the terminal device can adjust the transmission power of the uplink signal to the target network device according to the path loss change information, so as to not only avoid the transmission power of the uplink signal being too small, and ensure that the target network device can reliably receive the uplink signal, but also avoid the interference of the uplink signal on other network devices. Further, the power consumption of the terminal device is reduced, and the performance of the terminal device is improved.

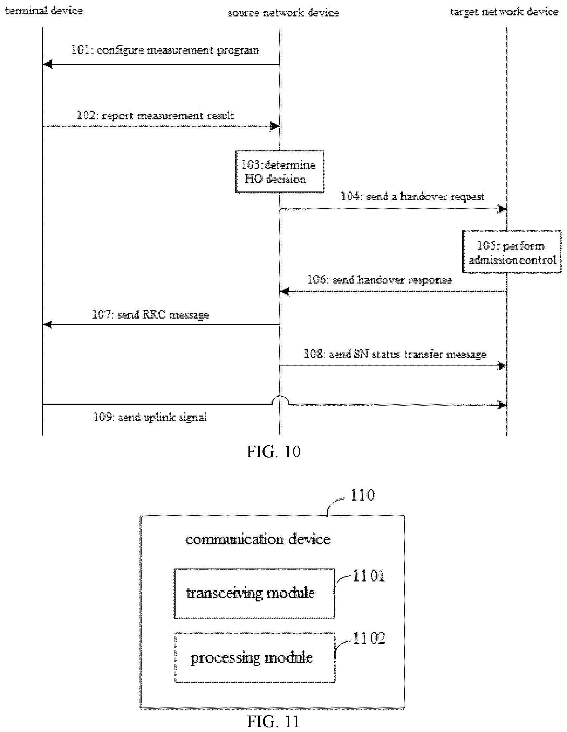

Referring to FIG. 10, FIG. 10 is a schematic diagram showing signaling interactions in a method for a random access channel less handover in a non-terrestrial network according to embodiments of the present disclosure. As shown in FIG. 10, the method may include but not limited to the following steps.

In step 101, the source network device configures a measurement program of the terminal device to the terminal device.

In step 102, the terminal device reports a measurement result to the source network device.

In step 103, the source network device receives the measurement result from the terminal device, and determines a handover decision according to the measurement result.

In step 104, the source network device sends a handover request message to the target network device.

It should be noted that if the NTN network has the transparent architecture, and the path loss change information of the terminal device before and after the RACH-less HO is determined by the target network device, the source network device also needs to send the path loss value of the first feeder link to the target Internet equipment.

In step 105, the target network device receives the handover request message and performs admission control.

In step 106, the target network device sends a handover response to the source network device.

Optionally, if the NTN network has the transparent architecture, and the path loss change information of the terminal device before and after the RACH-less HO is determined by the source network device, the handover response sent by the target network device to the source network device may include at least one of uplink authorization information, the path loss value of the second feeder link, or a feeder link value corresponding to the target network device.

In step 107, the source network device sends a radio resource control (RRC) configuration message to the terminal device.

Optionally, if the NTN network has the transparent architecture, the source network device also needs to send the path loss change information of the terminal device before and after the RACH-less HO to the terminal device.

In step 108, in response to a data radio bearer (DRB) being not configured with a dualactive protocol stack (DAPS), the source network device sends a serial number (SN) status transfer message to the target network device.

Optionally, in response to the DRB being configured with the DAPS, the source network device sends a serial number status transfer early status transfer message.

In step 109, the terminal device determines the transmission power of the uplink signal according to the path loss change information before and after the handover, and sends the uplink signal to the target network device based on the transmission power determined, so as to perform uplink synchronization with the target network device.

It should be noted that any step of the above steps 101-109 may be modified correspondingly with reference to the foregoing embodiments, and will not be repeated here.

In the above embodiments provided in the present disclosure, the methods according to embodiments of the present disclosure are introduced from perspectives of the terminal device, the source network device and the target network device, respectively. In order to implement various functions in the methods according to embodiments of the present disclosure, the terminal device, the source network device or the target network device may include a hardware structure and a software module, and implement the above various functions in a form of the hardware structure, the software module, or the hardware structure plus the software module. A certain function among the above mentioned various functions may be performed in the form of the hardware structure, the software module, or the hardware structure plus the software module.

Referring to FIG. 11, FIG. 11 is a schematic block diagram of a communication device 110 according to embodiments of the present disclosure. The communication device 110 shown in FIG. 11 may include a transceiving module 1101 and a processing module 1102. The transceiving module 1101 may include a sending module and/or a receiving module, the sending module is configured to implement a sending function, the receiving module is configured to implement a receiving function, and the transceiving module 1101 may implement the sending function and/or the receiving function.

The communication device 110 may be a terminal device (such as the terminal device in the aforementioned method embodiments), an apparatus in the terminal device, or an apparatus that may be matched with the terminal device and used together with the terminal device. Alternatively, the communication device 110 may be a source network device (such as the source network device in the foregoing method embodiments), an apparatus in the source network device, or an apparatus that may be matched with the source network device and used together with the source network device. Alternatively, the communication device 110 may be a target network device, an apparatus in the target network device, or an apparatus that may be matched with the target network device and used together with the target network device.

Specifically, if the communication apparatus 110 is the terminal device (such as the terminal device in the aforementioned method embodiments), the processing module is configured to determine path loss change information of a terminal device before and after a handover. The processing module is further configured to determine a transmission power of an uplink signal to a target network device according to the path loss change information.

Optionally, the processing module is specifically configured to: determine the path loss change information of the terminal device before and after a random access channel less handover (RACH-less HO) according to first indication information sent by a network device; or determine the path loss change information of the terminal device before and after the RACH-less HO according to an ephemeris of a satellite before the handover, an ephemeris of a satellite after the handover, position information of the terminal device before the handover, and position information of the terminal device after the handover.

Optionally, the communication device further includes a transceiving module 1101. The transceiving module 1101 is configured to: receive the first indication information sent by a source network device; or receive the first indication information sent by the target network device via the source network device.

Optionally, the processing module is specifically configured to: determine position information of the satellite before the handover and position information of the satellite after the handover according to the ephemeris of the satellite before the handover and the ephemeris of the satellite after the handover; determine a variation in length of service links before and after the handover according to the position information of the satellite before the handover, the position information of the satellite after the handover, the position information of the terminal device before the handover, and the position information of the terminal device after the handover; and determine the path loss change information before and after the RACH-less HO by using a preset path loss model according to the variation in length of the service links and a variation in frequency before and after the handover.

Optionally, the transceiving module 1101 is further configured to receive second indication information sent by the network device. The second indication information is used to indicate the preset path loss model. Alternatively, the processing module 1102 is further configured to determine the preset path loss model according to a free space path loss model.

Optionally, the path loss change information includes at least one of a path loss variation, an adjustment value of the transmission power of the uplink signal, or an amplification factor of a satellite after the handover.

Optionally, the processing module 1102 is further configured to: determine timing advance information according to an ephemeris of a satellite before the handover, an ephemeris of a satellite after the handover, position information of the terminal device before the handover, and position information of the terminal device after the handover.

With the communication device provided in the present disclosure, the terminal device first determines the path loss change information of the terminal device before and after the handover, and then determines the transmission power of the uplink signal to the target network device according to the path loss change information. Therefore, the terminal device determines the transmission power of the uplink signal, so as to not only avoid the transmission power of the uplink signal being too low and enable the target network device to reliably receive the uplink signal, but also avoid the interference of the uplink signal on other network devices, reduce the power consumption of the terminal device, and improve the performance of the terminal device.

If the communication apparatus 110 is the source network device (such as the source network device in the aforementioned method embodiments), the processing module 1102 is configured to determine path loss change information of a terminal device before and after a handover; and the transceiving module 1101 is configured to send first indication information to the terminal device. The first indication information is used to indicate the path loss change information of the terminal device before and after the handover.

Optionally, the transceiving module 1101 is further configured to receive the path loss change information of the terminal device before and after a random access channel less handover (RACH-less HO) sent by a target network device; or the processing module 1102 is further configured to determine the path loss change information of the terminal device before and after a random access channel less handover (RACH-less HO) according to a path loss value of a first feeder link corresponding to a source network device and a path loss value of a second feeder link sent by the target network device.

Optionally, the transceiving module 1101 is further configured to: send the path loss value of the first feeder link to the target network device.

With the communication device provided in the present disclosure, the source network device first determines the path loss change information of the terminal device before and after the handover, and then sends to the terminal device the first indication information for indicating the path loss change information of the terminal device before and after the handover, so that the terminal device is able to adjust the transmission power of the uplink signal to the target network device according to the path loss change information, so as to not only avoid the transmission power of the uplink signal being too low and enable the target network device to reliably receive the uplink signal, but also avoid the interference of the uplink signal on other network devices, reduce the power consumption of the terminal device, and improve the performance of the terminal device.

If the communication apparatus 110 is the target network device (such as the target network device in the aforementioned method embodiments), the processing module 1102 is configured to determine path loss change information of a terminal device before and after a handover; and the transceiving module 1101 is configured to send the path loss change information to a source network device.

Optionally, the transceiving module 1101 is further configured to receive a path loss value of a first feeder link sent by the source network device; and the processing module 1102 is further configured to determine the path loss change information of the terminal device before and after a random access channel less handover (RACH-less HO) according to the path loss value of the first feeder link and a path loss value of a second feeder link corresponding to the target network device.

With the communication device provided in the present disclosure, the target network device first determines the path loss change information of the terminal device before and after the handover, and then sends the path loss change information to the source network device, and the source network device forwards the path loss change information to the terminal device, so that the terminal device is able to adjust the transmission power of the uplink signal to the target network device according to the path loss change information, so as to not only avoid the transmission power of the uplink signal being too low and enable the target network device to reliably receive the uplink signal, but also avoid the interference of the uplink signal on other network devices, reduce the power consumption of the terminal device, and improve the performance of the terminal device.

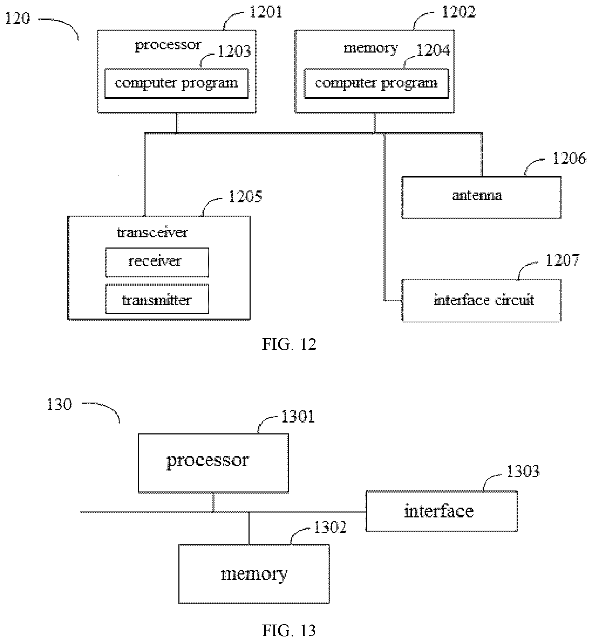

Referring to FIG. 12, FIG. 12 is a schematic block diagram of another communication device 120 according to embodiments of the present disclosure. The communication device 120 may be a network device or a terminal device (such as the terminal device in the aforementioned method embodiments), or may be a chip, a chip system, or a processor that supports the network device to implement the above method, or may be a chip, a chip system, or a processor that supports the terminal device to implement the above method. The device may be used to implement the methods as described in the above method embodiments, and for details, reference may be made to the descriptions on the above method embodiments.

The communication device 120 may include one or more processors 1201. The processor 1201 may be a general-purpose processor or a special-purpose processor. For example, it may be a baseband processor or a central processing unit. The baseband processor may be configured to process a communication protocol and communication data, and the central processing unit may be configured to control the communication device (such as a base station, a baseband chip, a terminal device, a terminal chip, a DU or a CU, etc.), execute computer programs, and process data of computer programs.

Optionally, the communication device 120 may further include one or more memories 1202 that may have stored therein a computer program 1204. The processor 1201 executes the computer program 1204 to cause the communication device 120 to implement the methods as described in the above method embodiments. Optionally, the memory 1202 may have stored therein data. The communication device 120 and the memory 1202 may be set separately or integrated together.

Optionally, the communication device 120 may further include a transceiver 1205 and an antenna 1206. The transceiver 1205 may be called a transceiving element, a transceiving machine, a transceiving circuit or the like, for implementing a transceiving function. The transceiver 1205 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 120 may further include one or more interface circuits 1207. The interface circuit 1207 is configured to receive a code instruction and transmit the code instruction to the processor 1201. The processor 1201 runs the code instruction to enable the communication device 120 to execute the methods as described in the foregoing method embodiments.

The communication device 120 is the terminal device (such as the terminal device in the aforementioned method embodiments), the processor 1201 is configured to perform the steps 21-22 in FIG. 2, the steps 31-32 in FIG. 3, the steps 41-42 in FIG. 4, and so on.

The communication device 120 is the source network device, the processor 1201 is configured to perform the step 61 in FIG. 6, the step 71 in FIG. 7 and so on, and the transceiver 1205 is configured to perform the step 62 in FIG. 6, the step 72 in FIG. 7 and so on.

The communication device 120 is the target network device, the processor 1201 is configured to perform the step 81 in FIG. 8, the step 92 in FIG. 9 and so on, and the transceiver 1205 is configured to perform the step 82 in FIG. 8, the steps 91 and 93 in FIG. 9 and so on.

In an implementation, the processor 1201 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation, the processor 1201 may have stored therein computer programs 1203 that, when run on the processor 1201, cause the communication device 120 to implement the method as described in the foregoing method embodiments. The computer program 1203 may be solidified in the processor 1201, and in this case, the processor 1201 may be implemented by a hardware.

In an implementation, the communication device 120 may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the terminal device in the foregoing method embodiments), but the scope of the communication device described in the present disclosure is not limited thereto, and a structure of the communication device is not limited by FIG. 13. The communication device may be a stand-alone device or may be a part of a larger device. For example, the communication device may be:

(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

For the case where the communication device may be a chip or a chip system, reference may be made to a schematic structural diagram of the chip 130 shown in FIG. 13. The chip shown in FIG. 13 includes a processor 1301 and an interface 1302. In the chip, one or more processors 1301 may be provided, and more than one interface 1302 may be provided.

For the case where the chip is used to implement functions of the terminal device in embodiments of the present disclosure, the processor 1301 is configured to perform the steps 21-22 in FIG. 2, the steps 31-32 in FIG. 3, the steps 41-42 in FIG. 4, and so on.

For the case where the chip is used to implement functions of the source network device in embodiments of the present disclosure, the processor 1301 is configured to perform the step 61 in FIG. 6, the step 71 in FIG. 7 and so on, and the interface 1302 is configured to perform the step 62 in FIG. 6, the step 72 in FIG. 7 and so on.

For the case where the chip is used to implement functions of the target network device in embodiments of the present disclosure, the processor 1301 is configured to perform the step 81 in FIG. 8, the step 92 in FIG. 9 and so on, and the interface 1302 is configured to perform the step 82 in FIG. 8, the steps 91 and 93 in FIG. 9 and so on.

Optionally, the chip further includes a memory 1303 for storing necessary computer programs and data.

Those skilled in the art may also understand that various illustrative logical blocks and steps listed in embodiments of the present disclosure may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such implementation should not be understood as beyond the protection scope of embodiments of the present disclosure.

Embodiments of the present disclosure also provide a communication system. The system includes the communication device as the terminal device and the communication device as the network device as described in the aforementioned embodiments in FIG. 11, or the system includes the communication device as the terminal device and the communication device as the network device as described in the aforementioned embodiments in FIG. 12.

The present disclosure also provides a readable storage medium having stored therein instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

It can be further understood that, although operations in some embodiments of the present disclosure are described in a specific order in the drawings, it should not be understood as requiring these operations to be performed in the specific order or in the serial order as shown, or requiring all the shown operations to be performed to get the desired result. In certain circumstances, multitasking and parallel processing may be advantageous.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

**Claims**

1. A method for a random access channel less handover in a non-terrestrial network, performed by a terminal device, comprising:

   determining path loss change information of the terminal device before and after the handover; and
   determining a transmission power of an uplink signal to a target network device according to the path loss change information.

2. The method according to claim 1, wherein determining the path loss change information of the terminal device before and after the handover comprises:

   determining the path loss change information of the terminal device before and after the random access channel less handover (RACH-less HO) according to first indication information sent by a network device; or
   determining the path loss change information of the terminal device before and after the random access channel less handover (RACH-less HO) according to an ephemeris of a satellite before the handover, an ephemeris of a satellite after the handover, position information of the terminal device before the handover, and position information of the terminal device after the handover.

3. The method according to claim 2, further comprising:

   receiving the first indication information sent by a source network device; or
   receiving the first indication information sent by the target network device via the source network device.

4. The method according to claim 2, wherein determining the path loss change information of the terminal device before and after the RACH-less HO according to the ephemeris of the satellite before the handover, the ephemeris of the satellite after the handover, the position information of the terminal device before the handover, and the position information of the terminal device after the handover comprises:

   determining position information of the satellite before the handover and position information of the satellite after the handover according to the ephemeris of the satellite before the handover and the ephemeris of the satellite after the handover;
   determining a variation in length of service links before and after the handover according to the position information of the satellite before the handover, the position information of the satellite after the handover, the position information of the terminal device before the handover, and the position information of the terminal device after the handover; and
   determining the path loss change information before and after the RACH-less HO by using a preset path loss model according to the variation in length of the service links and a variation in frequency before and after the handover.

5. The method according to claim 4, further comprising:

   receiving second indication information sent by the network device, wherein the second indication information is used to indicate the preset path loss model; or
   determining the preset path loss model according to a free space path loss model.

6. The method according to any one of claims 1-5, wherein the path loss change information comprises at least one of: a path loss variation, an adjustment value of the transmission power of the uplink signal, or an amplification factor of a satellite after the handover.

7. The method according to any one of claims 1-6, further comprising:
   determining timing advance information according to an ephemeris of a satellite before the handover, an ephemeris of a satellite after the handover, position information of the terminal device before the handover, and position information of the terminal device after the handover.

8. A method for a random access channel less handover in a non-terrestrial network, performed by a source network device, comprising:

determining path loss change information of a terminal device before and after the handover; and
sending first indication information to the terminal device, wherein the first indication information is used to indicate the path loss change information of the terminal device before and after the handover.

9. The method according to claim 8, wherein determining the path loss change information of the terminal device before and after the handover comprises:

receiving the path loss change information of the terminal device before and after the random access channel less handover (RACH-less HO) sent by a target network device; or
determining the path loss change information of the terminal device before and after the random access channel less handover (RACH-less HO) according to a path loss value of a first feeder link corresponding to the source network device and a path loss value of a second feeder link sent by the target network device.

10. The method according to claim 9, further comprising:
sending the path loss value of the first feeder link to the target network device.

11. A method for a random access channel less handover in a non-terrestrial network, performed by a target network device, comprising:

determining path loss change information of a terminal device before and after the handover; and
sending the path loss change information to a source network device.

12. The method according to claim 11, wherein determining the path loss change information of the terminal device before and after the handover comprises:

receiving a path loss value of a first feeder link sent by the source network device; and
determining the path loss change information of the terminal device before and after the random access channel less handover (RACH-less HO) according to the path loss value of the first feeder link and a path loss value of a second feeder link corresponding to the target network device.

13. A communication device, configured at a terminal device side, comprising:

a processing module, configured to determine path loss change information of a terminal device before and after a handover;
wherein the processing module is further configured to determine a transmission power of an uplink signal to a target network device according to the path loss change information.

14. The communication device according to claim 13, wherein the processing module is specifically configured to:

determine the path loss change information of the terminal device before and after a random access channel less handover (RACH-less HO) according to first indication information sent by a network device; or
determine the path loss change information of the terminal device before and after a random access channel less handover (RACH-less HO) according to an ephemeris of a satellite before the handover, an ephemeris of a satellite after the handover, position information of the terminal device before the handover, and position information of the terminal device after the handover.

15. The communication device according to claim 14, further comprising a transceiving module configured to:

receive the first indication information sent by a source network device; or
receive the first indication information sent by the target network device via the source network device.

16. The communication device according to claim 14, wherein the processing module is specifically configured to:

determine position information of the satellite before the handover and position information of the satellite after the handover according to the ephemeris of the satellite before the handover and the ephemeris of the satellite after the handover;
determine a variation in length of service links before and after the handover according to the position information of the satellite before the handover, the position information of the satellite after the handover, the position information of the terminal device before the handover, and the position information of the terminal device after the handover; and

determine the path loss change information before and after the RACH-less HO by using a preset path loss model according to the variation in length of the service links and a variation in frequency before and after the handover.

17. The communication device according to claim 16, wherein the transceiving module is further configured to receive second indication information sent by the network device, wherein the second indication information is used to indicate the preset path loss model; or

the processing module is further configured to determine the preset path loss model according to a free space path loss model.

18. The communication device according to any one of claims 13 to 17, wherein the path loss change information comprises at least one of a path loss variation, an adjustment value of the transmission power of the uplink signal, or an amplification factor of a satellite after the handover.

19. The communication device according to any one of claims 13 to 18, wherein the processing module is further configured to: determine timing advance information according to an ephemeris of a satellite before the handover, an ephemeris of a satellite after the handover, position information of the terminal device before the handover, and position information of the terminal device after the handover.

20. A communication device, configured at a source network device side, comprising:

a processing module, configured to determine path loss change information of a terminal device before and after a handover; and

a transceiving module, configured to send first indication information to the terminal device, wherein the first indication information is used to indicate the path loss change information of the terminal device before and after the handover.

21. The communication device according to claim 20, wherein the transceiving module is further configured to receive the path loss change information of the terminal device before and after a random access channel less handover (RACH-less HO) sent by a target network device; or

the processing module is further configured to determine the path loss change information of the terminal device before and after a random access channel less handover (RACH-less HO) according to a path loss value of a first feeder link corresponding to a source network device and a path loss value of a second feeder link sent by the target network device.

22. The communication device according to claim 21, wherein the transceiving module is further configured to:
send the path loss value of the first feeder link to the target network device.

23. A communication device, configured at a target network device side, comprising:

a processing module, configured to determine path loss change information of a terminal device before and after a handover; and

a transceiving module, configured to send the path loss change information to a source network device.

24. The communication device according to claim 23, wherein the transceiving module is further configured to receive a path loss value of a first feeder link sent by the source network device; and

the processing module is further configured to determine the path loss change information of the terminal device before and after a random access channel less handover (RACH-less HO) according to the path loss value of the first feeder link and a path loss value of a second feeder link corresponding to the target network device.

25. A communication device, comprising:

a processor; and
a memory, having stored therein computer programs,
wherein the processor is configured to execute the computer programs stored in the memory to cause the communication device to perform the method according to any one of claims 1 to 7.

26. A communication device, comprising:

   a processor; and
   a memory, having stored therein computer programs,
   wherein the processor is configured to execute the computer programs stored in the memory to cause the communication device to perform the method according to any one of claims 8 to 10.

27. A communication device, comprising:

   a processor; and
   a memory, having stored therein computer programs,
   wherein the processor is configured to execute the computer programs stored in the memory to cause the communication device to perform the method according to any one of claims 11 to 12.

28. A communication device, comprising: a processor and an interface circuit;

   wherein the interface circuit is configured to receive code instructions and transmit the code instructions to the processor; and
   the processor is configured to run the code instructions to perform the method according to any one of claims 1 to 7.

29. A communication device, comprising: a processor and an interface circuit;

   wherein the interface circuit is configured to receive code instructions and transmit the code instructions to the processor; and
   the processor is configured to run the code instructions to perform the method according to any one of claims 8 to 10.

30. A communication device, comprising: a processor and an interface circuit;

   wherein the interface circuit is configured to receive code instructions and transmit the code instructions to the processor; and
   the processor is configured to run the code instructions to perform the method according to any one of claims 11 to 12.

31. A computer-readable storage medium having stored therein instructions that, when executed, cause the method according to any one of claims 1 to 7 to be implemented.

32. A computer-readable storage medium having stored therein instructions that, when executed, cause the method according to any one of claims 8 to 10 to be implemented.

33. A computer-readable storage medium having stored therein instructions that, when executed, cause the method according to any one of claims 11 to 12 to be implemented.

satellite 13

feeder link

service link

source network
device 11

feeder link

terminal device 14

target network device 12

FIG. 1

| determining path loss change information of the terminal device before and after the handover | 21 |

| adjusting a transmission power of an uplink signal to a target network device according to the path loss change information | 22 |

FIG. 2

| determining the path loss change information of the terminal device before and after the RACH-less HO according to an ephemeris of a satellite before the handover, an ephemeris of a satellite after the handover, position information of the terminal device before the handover, and position information of the terminal device after the handover | 31 |

| adjusting a transmission power of an uplink signal to a target network device according to the path loss change information | 32 |

FIG. 3

| determining the path loss change information of the terminal device before and after the RACH-less HO according to first indication information sent by a network device | 41 |

| adjusting a transmission power of an uplink signal to a target network device according to the path loss change information | 42 |

FIG. 4

determining timing advance information according to an ephemeris of a satellite before the handover, an ephemeris of a satellite after the handover, position information of the terminal device before the handover, and position information of the terminal device after the handover — 51

FIG. 5

determining path loss change information in feeder link before and after the terminal device performs the handover — 61

sending first indication information to the terminal device, wherein the first indication information is used to indicate the path loss change information in feeder link before and after terminal device performs the handover — 62

FIG. 6

determining path loss change information in feeder link before and after the terminal device performs the handover — 71

sending first indication information to the terminal device, wherein the first indication information is used to indicate the path loss change information in feeder link before and after terminal device performs the handover — 72

FIG. 7

determining path loss change information in feeder link before and after the terminal device performs the handover — 81

sending the path loss change information in feeder link to the source network device — 82

FIG. 8

receiving a path loss value of a first feeder link sent by the source network device — 91

determining path loss change information in feeder link before and after the terminal device performs the RACH-less HO according to the path loss value of the first feeder link and a path loss value of a second feeder link corresponding to the target network device — 92

sending the path loss change information in feeder link to the source network device — 93

FIG. 9

terminal device                           source network device                    target network device

101: configure measurement program

102: report measurement result

103: determine
HO decision

104: send a handover request

105: perform
admission control

106: send handover response

107: send RRC message

108: send SN status transfer message

109: send uplink signal

FIG. 10

110

communication device

transceiving module          1101

processing module          1102

FIG. 11

120 —

1201 — processor
1203 — computer program

1202 — memory
1204 — computer program

1206 — antenna

1205 — transceiver
receiver
transmitter

1207 — interface circuit

FIG. 12

130 —

1301 — processor

1303 — interface

1302 — memory

FIG. 13

EP 4 460 112 A1

**INTERNATIONAL SEARCH REPORT**

International application No.

**PCT/CN2021/143967**

### A. CLASSIFICATION OF SUBJECT MATTER

H04W 52/14(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 切换, 路径损耗, 变化, 上行, 功率, 补偿, 位置, 距离, 时间提前, 非地面网络, 无随机接入信道切换, handover, path loss, change, UL, power, compensate, position, range, distance, TA, NTN, rach less ho

### C. DOCUMENTS CONSIDERED TO BE RELEVANT

| Category* | Citation of document, with indication, where appropriate, of the relevant passages | Relevant to claim No. |
|---|---|---|
| X | CN 112788723 A (HUAWEI TECHNOLOGIES CO., LTD.) 11 May 2021 (2021-05-11) description, paragraphs [0091]-[0345] | 1, 8-13, 20-33 |
| Y | CN 112788723 A (HUAWEI TECHNOLOGIES CO., LTD.) 11 May 2021 (2021-05-11) description, paragraphs [0091]-[0345] | 2-7, 14-19, 25, 28, 31 |
| Y | SAMSUNG. "Remaining issues for NTN" *3GPP TSG RAN WG1 #105-e R1-2105309*, 12 May 2021 (2021-05-12), section 4 | 2-7, 14-19, 25, 28, 31 |
| Y | HUAWEI et al. "Overview of NTN" *3GPP TSG RAN WG1 Meeting #97 R1-1905996*, 04 May 2019 (2019-05-04), section 2.3.2 | 7, 19, 25, 28, 31 |
| A | CN 110891305 A (VIVO COMMUNICATION TECHNOLOGY CO., LTD.) 17 March 2020 (2020-03-17) entire document | 1-33 |
| A | CN 111901859 A (ZTE CORP.) 06 November 2020 (2020-11-06) entire document | 1-33 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 August 2022** | **15 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 460 112 A1

**INTERNATIONAL SEARCH REPORT**

International application No.

**PCT/CN2021/143967**

**C.    DOCUMENTS CONSIDERED TO BE RELEVANT**

| Category* | Citation of document, with indication, where appropriate, of the relevant passages | Relevant to claim No. |
|---|---|---|
| A | CN 112188602 A (CHINA MOBILE COMMUNICATION LTD., RESEARCH INSTITUTE et al.) 05 January 2021 (2021-01-05)<br>entire document | 1-33 |

Form PCT/ISA/210 (second sheet) (January 2015)

29

# EP 4 460 112 A1

| Patent document cited in search report | | | Publication date (day/month/year) | Patent family member(s) | Publication date (day/month/year) |
|---|---|---|---|---|---|
| CN | 112788723 | A | 11 May 2021 | None | |
| CN | 110891305 | A | 17 March 2020 | None | |
| CN | 111901859 | A | 06 November 2020 | None | |
| CN | 112188602 | A | 05 January 2021 | None | |

**INTERNATIONAL SEARCH REPORT**
Information on patent family members

International application No.

**PCT/CN2021/143967**

Form PCT/ISA/210 (patent family annex) (January 2015)